# EUROPÄISCHE PATENTSCHRIFT

(11) **EP 0 635 441 B1**
(45) Veröffentlichungstag und Bekanntmachung des Hinweises auf die Patenterteilung: **01.10.1997**
(21) Anmeldenummer: 94110790.6
(22) Anmeldetag: 12.07.1994
(51) Int. Cl.: B65G 21/22

(54) **Förderkette**
Conveyor chain
Chaîne transporteuse

(30) Priorität: 19.07.1993 DE 4324120
(43) Veröffentlichungstag der Anmeldung: 25.01.1995
(73) Patentinhaber: Hauni Maschinenbau Aktiengesellschaft, D-21033 Hamburg (DE)
(72) Erfinder: Krössmann,Jürgen, D-19063 Schwerin (DE); Golz, Peter, D-21217 Seevetal (DE); Rinke, Andreas, D-23843 Bad Oldesloe (DE); Dürig, Martina, D-21465 Wentorf (DE)

(56) Entgegenhaltungen:
- DE-A- 2 822 196
- FR-A- 2 583 024

## Beschreibung

Die Erfindung betrifft eine Förderkette zum queraxialen Fördern von stabförmigen Artikeln der tabakverarbeitenden Industrie, insbesondere als mehrlagigen Massenstrom, entlang einer Förderstrecke, deren Glieder gelenkig miteinander verbunden und mit aufrecht angeordneten Tragbolzen versehen sind, welche an ihrem oberen Ende eine Tragplatte mit einer in einer Radialebene des Tragbolzens verlaufenden Auflagefläche für das Fördergut tragen.

Eine derartige Förderkette ist aus der EP 0 221 683 B1 bekannt. Sie besteht aus aufeinanderfolgend verschiedenartigen Kettengliedern, die so miteinander verbunden sind, daß die Achsen der Gelenke horizontal und zueinander parallel verlaufen. Dadurch ist die Kette nur vertikal auslenkbar. Jedes zweite Kettenglied ist ein Tragglied mit einem Tragbolzen, der an seinem oberen Ende eine Tragfläche für das Fördergut aufweist. Diese Kette ist zwar für das Transportieren eines mehrlagigen Zigarettenmassenstroms vorgesehen, aber nicht kurvengängig. Insbesondere ist die bekannte Kette nicht geeignet, einen mehrlagigen Zigarettenmassenstrom in einem Wendelspeicher zu fördern, wie er beispielsweise in der DE 42 24 609 A1 der Anmelderin beschrieben ist.

Der Erfindung liegt die Aufgabe zugrunde, eine Förderkette der eingangs angegebenen Art weiter zu verbessern, insbesondere eine Förderkette anzugeben, mit der ein Zigarettenmassenstrom sicher und schonend entlang den Windungen eines Wendelspeichers bewegt werden kann.

Gelöst wird diese Aufgabe erfindungsgemäß dadurch, daß die Gelenkbolzen aufeinanderfolgender Gelenke senkrecht zueinander verlaufen, daß jeder zweite Gelenkbolzen als wenigstens nach einer Seite aus dem Gelenk herausragender Tragbolzen mit einer in einer zu seiner Achse radialen Ebene schwenkbaren Tragplatte ausgebildet ist, daß der Tragbolzen wenigstens einen aus dem Gelenk herausragenden axialen Abschnitt aufweist, an welchem zwei Laufrollen mit im wesentlichen zylindrischen, konzentrisch zur Tragbolzenachse verlaufenden Mantelflächen drehbar gelagert sind, daß die Mantelfläche der Laufrollen eines Tragbolzens zur horizontalen Ausrichtung der Auflagefläche der Tragplatten durch eine auf die Kette wirkende Zugkraft mit zwei quer zur Laufrichtung vertikal übereinander parallel verlaufenden Laufflächen einer wenigstens streckenweise konvex gebogenen Führungsbahn in die Last des Förderguts tragende Anlage bringbar sind und daß horizontale Gelenkbolzen, die auf beiden Seiten aus den zwischen den Gelenken mit den Tragbolzen liegenden Gelenken herausragen, in Förderrichtung verschiebbar in einen zwischen den parallelen Laufflächen der Führungsbahn verlaufenden Schlitz hineinzuragen vorgesehen sind. Diese Ausbildung der Förderkette hat den Vorteil, daß sie kurvengängig ist, also außer nach oben und unten auch nach beiden Seiten ausgelenkt werden kann und daß alle Kettenglieder gleich ausgebildet sein können. Eine Unterscheidung zwischen Traggliedern und Verbindungsgliedern ist nicht erforderlich. Dadurch, daß jede Tragplatte am Ende eines Tragbolzens gelagert und in einer zum Tragbolzen radialen Ebene schwenkbar ist, bilden aufeinanderfolgende Tragplatten eine durchgehende Fläche, auf der das Fördergut auch in Kurven sicher aufliegt. Die Schwenkbarkeit der Tragplatten bewirkt eine Erhöhung der Flexibilität der Kette in seitlicher Richtung. Dabei gewährleisten die auf den Tragbolzen drehbar gelagerten Laufrollen, die die Kette auch an langen gebogenen Laufflächen sicher stützen und tragen, einen langfristig verschleißarmen bzw. verschleißfreien Betrieb. Die an den vertikalen Laufflächen abrollenden Laufrollen führen die Kette nicht nur entlang der vorgesehenen Führungsbahn, sondern richten die Tragplatten auch horizontal aus und nehmen auch die Lasten auf.

In der FR-A 2 583 024 ist ein Gepäckförderer beschrieben, der mit einer Kette angetrieben ist. Aufeinanderfolgende Kettenglieder sind durch vertikale Tragbolzen verbunden, die an ihrem oberen Ende Tragplatten für das Gepäck aufweisen. Auf den Tragbolzen sind um die Tragbolzenachsen drehbare Führungsrollen gelagert. Schienen führen die Rollen entlang ihrer vorgesehenen Bewegungsbahn. Da die Last von zusätzlichen Schienen aufgenommen wird, auf denen die Unterseite der Tragplatten gleitet, haben die Führungsrollen und -schienen keine Last zu tragen und dienen ausschließlich der Führung der Kette. Wegen ihres Aufbaus erlaubt diese Kette auch keinen Auf- und Abtransport des Fördergutes.

Aus der DE 32 35 224 A1 (≙ US 45 97 492) ist eine kurvengängige Förderkette bekannt, deren Glieder Tragplatten aufweisen, die eine durchgehende Auflagefläche bilden. Die Tragplatten bilden selbst die Kettenglieder, die durch Kreuzgelenke miteinander verbunden sind, wobei horizontale und vertikale Gelenkbolzen einander durchdringen. Dadurch ergibt sich ein relativ komplizierter Aufbau. Laufrollen sind an dieser Kette nicht vorgesehen, so daß sie an stationären Führungen nur unter starker Gleitreibung bewegt werden kann. Für lange gebogene Förderwege mit stationärer Kurvenführung ist diese Kette daher nicht ohne weiteres geeignet. Insbesondere kann sie nicht in einem Wendelspeicher größerer Speicherkapazität für einen Zigarettenmassenstrom verwendet werden.

Eine weitere Trag- und Zugkette, die insbesondere für den Transport schwerer Stückgüter um die Ecke vorgesehen ist, ist durch die DE-OS 28 22 196 bekannt. Diese Kette besteht aus gleichen Kettengliedern, die mit abwechselnd horizontal und vertikal verlaufenden Gelenkbolzen miteinander verbunden sind. Die horizontalen Gelenkbolzen tragen an ihren Enden Tragrollen, die auf horizontalen Führungsflächen laufen und die Kette mit der Last permanent stützen. Die vertikalen Gelenkbolzen weisen am oberen Ende jeweils eine Tragplatte und an zwei axialen Abschnitten Laufrollen für die seitliche Führung der Kette aur. Diese Kette kann, wie die Beschreibung ausführt, schraubenförmig über 360° verlaufen. Dabei läuft die Kette aber mit den Tragrollen auf der horizontalen Führungsfläche, die die Last trägt. Das erfordert eine sehr aufwendige Ausbildung der Kettenführung und schließt führungslose Förderabschnitte beim Richtungswechsel und Änderungen der Förderweglänge im Betrieb aus. Für das Fördern eines Zigarettenmassenstroms in einem Speicher variabler Kapazität ist diese Kette weder vorgesehen noch geeignet.

Die gemäß der Erfindung vorgeschlagene Kette dagegen läuft mit ihren in einer im wesentlichen horizantalen Ebene umlaufenden Laufrollen an konvex gebogenen vertikalen Führungsflächen, wobei die Laufrollen die Lage und Ausrichtung der Kette stabilisieren und als Tragrollen die Last tragen. Zusätzliche Tragrollen, die auf einer horizontalen Führungsfläche laufen, sind weder vorgesehen noch erforderlich. Die Lagerung der Laufrollen an dem vertikalen Trag- bzw. Gelenkbolzen erlaubt eine problemlose seitliche Richtungsänderung der Führungsflächen und der Förderbahn, wie sie ein Wendelspeicher der in der eingangs bereits erwähnten DE 42 24 609 A1 beschriebenen Art erfordert.

In weiterer Ausbildung der Förderkette nach der Erfindung ist vorgesehen, daß jede Tragplatte an den in Förderrichtung vorderen und hinteren Rändern Vorsprünge und Ausnehmungen hat, daß die Vorsprünge und Ausnehmungen des vorderen Randes zu denen des hinteren Randes seitlich versetzt sind und daß die Vorsprünge und Ausnehmungen aufeinanderfolgender Tragplatten zum Bilden einer Auflagefläche für das Fördergut mit Spiel ineinandergreifen. Diese Ausbildung der Tragplatten ist insbesondere für das Fördern von stabförmigen Artikeln der tabakverarbeitenden Industrie geeignet und vorgesehen, weil das Ineinandergreifen der Vorsprünge und Ausnehmungen der Tragplatten störende Lücken zwischen den Tragplatten verhindert. Zum Ausrichten der Tragplatten in Förderrichtung kann jede Tragplatte an ihrer Unterseite eine sich in Förderrichtung über das Auflageflächenprofil hinaus erstreckende Führungsstange aufweisen, welche mit Spiel in eine entsprechende Aussparung an der Unterseite der benachbarten Tragplatte eingreift. So ist ein unkontrolliertes Verdrehen der Tragplatten zueinander ausgeschlossen.

Eine Fortführung der Erfindung sieht vor, daß als Laufflächen die mit Abstand vertikal übereinander verlaufenden Frontflächen von die Führungsbahn bildenden parallelen Schienen vorgesehen sind, daß am Tragbolzen zwei Laufrollen drehbar gelagert sind und daß jede Laufrolle eine im wesentlichen zylindrische Lauffläche zum Abrollen auf einer Schiene und einen Spurkranz zum Führen der Laufrolle entlang der Schiene aufweist. Hiernach ragt der Tragbolzen vorzugsweise auf beiden Seiten aus dem betreffenden Gelenk heraus. Auf beiden Seiten des Gelenks ist jeweils eine Laufrolle mit einem Spurkranz zum Führen der Kette entlang zweier paralleler, die Förderstrecke vorgebender Schienen auf dem Tragbolzen drehbar gelagert. Die Tragplatte ist an dem die obere Laufrolle überragenden freien Ende des Tragbolzens angebracht. Vorzugsweise liegen die parallelen Laufflächen der Führungsbahn in einer vertikalen Ebene übereinander und die beiden Laufrollen eines Tragbolzens liegen einseitig an diesen Laufflächen an. Dadurch wird erreicht, daß die Auflageflächen der Tragplatten im Fördertrum der Kette eine im wesentlichen horizontale oder in Förderrichtung leicht ansteigende bzw. abfallende durchgängige Fläche bilden. Die Laufrollen dienen auf diese Weise der horizontalen Ausrichtung der Auflagefläche der Tragplatten und nehmen unter der Wirkung des auf die Kette wirkenden Zugs die Last des Fördergutes und des Eigengewichts der Kette auf. Die vertikale Ausrichtung der Kette ist durch die Spurkränze der Laufrollen gesichert.

In einer weiteren Fortführung der Erfindung weisen die zwischen den Gelenken mit den Tragbolzen liegenden Gelenke senkrecht zu den Tragbolzen und zur Förderrichtung verlaufende Gelenkbolzen auf. Diese Gelenkbolzen ragen auf beiden Seiten aus den Gelenken heraus. Sie können in eine entlang der Führungsbahn verlaufende Führungsnut eingreifen und so die vertikale Ausrichtung der Kette zusätzlich zu den Spurkränzen der Laufrollen unterstützen oder diese ersetzen. In erster Linie aber dienen sie zum Umlenken der Kette über Kettenräder an den Enden der Förderstrecke.
In Fortsetzung der Erfindung sind die Laufrollen aufeinanderfolgender Tragbolzen zum Eingreifen in die Verzahnung eines Kettenrades ausgebildet und angeordnet. Wird das Kettenrad angetrieben, so bewegt es als Antriebsmittel über die Laufrollen die Kette in Längsrichtung. Bei einer längeren Kette können mehrere Kettenräder dieser Art vorgesehen sein.

Eine weitere vorteilhafte Ausgestaltung der Erfindung sieht vor, daß die Tragplatten auf ihrer Auflagefläche quer zur Förderrichtung verlaufende buckelartige Erhebungen zum queraxialen Ausrichten der geförderten Artikel in wechselnden Kurven aufweisen. Dadurch bleibt die queraxiale Ausrichtung der stabförmigen Artikel im Massenstrom auch beim Durchlaufen von Bögen wechselnder Richtung erhalten. Eine lange Lebensdauer der Kette gewährleisten Laufrollen aus einem verschleißfesten Sintermaterial.

Die Ansprüche 11 und 12 betreffen eine Fördervorrichtung mit einer Kette der erfindungsgemäßen Art.

Durch die Erfindung wird eine Förderkette einfachen Aufbaus vorgeschlagen, die nur aus einer Art von Kettengliedern besteht und daher rationell zu fertigen ist. Die von den Tragbolzen getragenen Tragplatten bilden eine weitgehend geschlossene Tragfläche, auf der sowohl einzelne stabförmige Artikel der tabakverarbeitenden Industrie wie auch ein ununterbrochener Massenstrom dieser Artikel sicher und schonend transportiert werden. Die Förderkette ist dabei flexibel und nach allen Seiten auslenkbar. So eignet sie sich besonders als Transportmittel in einem Wendelspeicher, wie er in der tabakverarbeitenden Industrie zum zeitweiligen Speichern von Zigaretten oder anderen stabförmigen Artikeln eingesetzt wird. Da für die Kette im Verlauf bogenförmiger Förderwegabschnitte nur eine einseitige Führung vorgesehen ist, ist der Aufwand für die Führung der Förderkette sehr gering. Insgesamt bietet die Erfindung ein flexibles, kurvengängiges Fördermittel, das sich besonders für den Transport von stabförmigen Artikeln der tabakverarbeitenden Industrie im Massenstrom in Wendelspeichern eignet und das einen sicheren und schonenden Transport der Artikel in wechselnde Richtungen bei geringem Aufwand für die Kettenführung gewährleistet.

Die Erfindung wird nun anhand der Zeichnung näher beschrieben.
Es zeigen
- Figuren 1 bis 3: einen Kettenabschnitt in einer Seitenansicht in drei verschiedenen Ausrichtungen,
- Figur 4: eine perspektivische Explosionszeichnung der Kette,
- Figur 5: eine Draufsicht auf einen Kettenabschnitt,
- Figur 6: einen Schnitt etwa entlang der Linie A-A der Figur 5,
- Figur 7: einen Schnitt etwa entlang der Linie B-B der Figur 5,
- Figur 8: einen Kettenabschnitt einer Kettenvariante im Bereich einer Umlenkung in einer Seitenansicht und
- Figur 9: einen Querschnitt durch eine Kettenvariante, etwa analog der Darstellung in Figur 6.

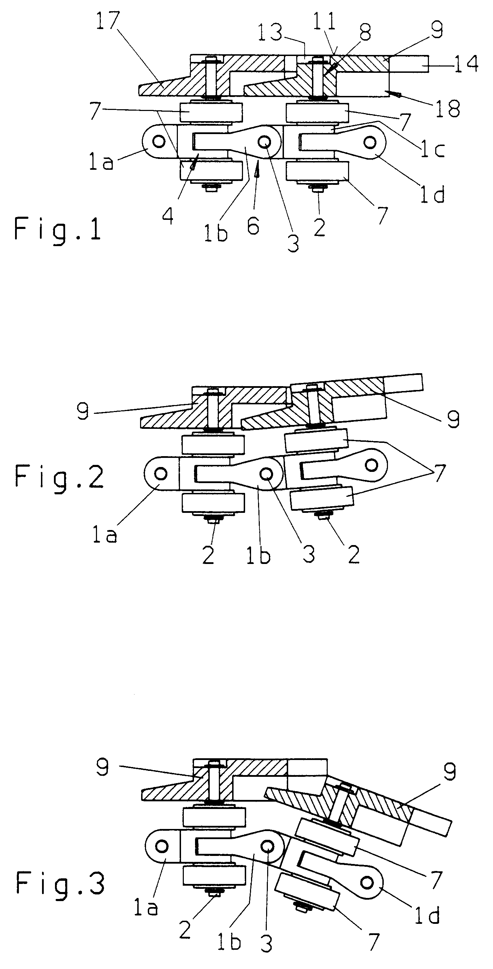

In Figur 1 ist eine teilweise geschnittene Seitenansicht einer Kette gemäß der Erfindung dargestellt. Diese Kette weist identisch ausgebildete Kettenglieder 1a,b,c,d auf, die gelenkig miteinander verbunden sind. Jedes Kettenglied ist mit zwei Gelenkbolzen 2 und 3, die senkrecht zueinander und senkrecht zur Förderrrichtung der Kette verlaufen, gelenkig mit den benachbarten Kettengliedern verbunden. Auf diese Weise ermöglichen aufeinanderfolgende Gelenke 4 und 6 abwechselnd ein horizontales und vertikales Auslenken der Kette, wodurch eine hohe Flexibilität der Kettenführung gegeben ist.

Gemäß der Erfindung sind die Gelenkbolzen 2 als Tragbolzen ausgebildet, die beidseits aus dem Gelenk 4 herausragen. Auf beiden Seiten des Gelenkes sind an den herausragenden Bolzenabschnitten Laufrollen 7 drehbar gelagert. Die Laufrollen 7 laufen in zu dem Tragbolzen 2 radialen Ebenen um. Ein Ende 8 des Tragbolzens 2 überragt die entsprechende auf dem Tragbolzen gelagerte Laufrolle 7 und trägt eine Tragplatte 9 mit einer Auflagefläche 11 für ein zu transportierendes Gut. Die Tragplatte 9 ist im Fördertrum der Kette etwa horizontal ausgerichtet und ihre Auflagefläche 11 verläuft in einer Radialebene des Tragbolzens. Die Tragplatte 9 ist im gezeigten Beispiel um den Tragbolzen 2 in dieser Radialebene schwenkbar. In Figur 1 ist die Tragplatte 9 in der Ebene der Bolzenlagerung geschnitten dargestellt. Die Tragplatte kann aus einem Metall oder einem Kunststoff bestehen und sollte möglichst leicht ausgebildet sein. Ihre horizontale Ausdehnung quer zur Förderrichtung ist so bemessen, daß die zu fördernden Artikel, vorzugsweise ein Massenstrom von stabförmigen Artikeln der tabakverarbeitenden Industrie, sicher darauf gehalten werden.

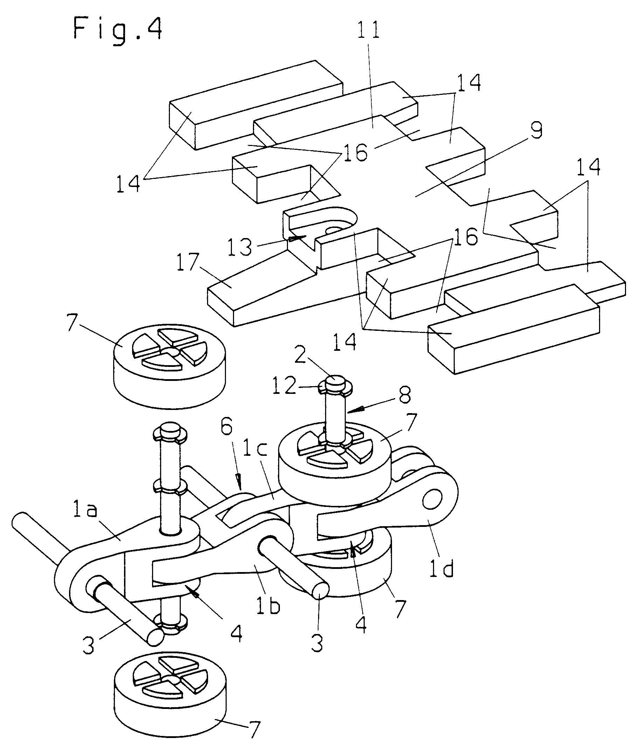

In der perspektivischen Explosionszeichnung der Figur 4 ist der Aufbau der erfindungsgemäß vorgeschlagenen Förderkette noch einmal deutlicher zu erkennen. Gleiche Teile sind mit denselben Bezugszeichen versehen wie in Figur 1. Hier ist die Ausbildung der Kettenglieder 1a bis 1d zu erkennen, welche identisch ausgebildet sind und jedes zwei senkrecht zueinander verlaufende Gelenkbolzenaufnahmen aufweist. Die Tragbolzen 2 ragen unsymmetrisch auf beiden Seiten aus den Gelenken 4 zwischen aufeinanderfolgenden Kettengliedern heraus. Auf beiden Seiten des Gelenkes ist je eine Laufrolle 7 drehbar gelagert. Am oberen Ende 8 des Tragbolzens 2, das auf der dem Gelenk 4 abgewandten Seite über die Laufrolle 7 hinausragt, ist die Tragplatte 9 aufgesetzt und mit einem Klemmring 12 befestigt, so daß sie in einer Radialebene zum Tragbolzen schwenkbar ist.

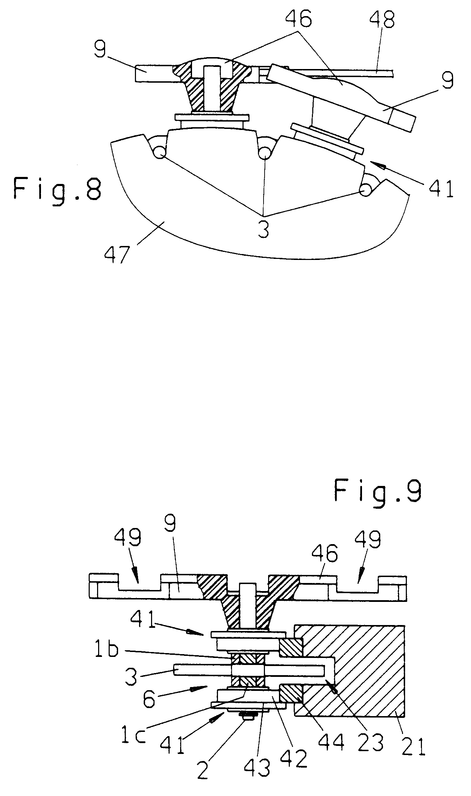

In der Darstellung der Figuren 1 bis 7 sind die Laufrollen 7 zylindrisch ausgebildet, d.h. sie weisen eine zylindrische Mantelfläche auf. Die Figuren 8 und 9 zeigen, daß die Laufrollen, dort mit 41 bezeichnet, neben einem zylindrischen Umfangsflächenabschnitt 42 einen radial hervortretenden Spur- oder Radkranz 43 aufweisen.

Die aufeinderfolgende Kettenglieder 1 in den Gelenken 6 miteinander verbindenden Gelenkbolzen 3 ragen beidseits aus dem Gelenk heraus (Figur 4). Ihre Aufgabe wird später erläutert.

Die Tragplatten 9 sind so auf die Enden 8 der Tragbolzen 2 aufgesetzt, daß diese nicht in die Auflagefläche 11 der Tragplatte hineinragen. Zu diesem Zweck weist die Tragplatte an ihrer Oberseite eine Vertiefung 13 auf, in welcher das Ende 8 des Tragbolzens 2 mündet und mit einem Klemmring oder einer Klemmplatte 12 fixiert werden kann.

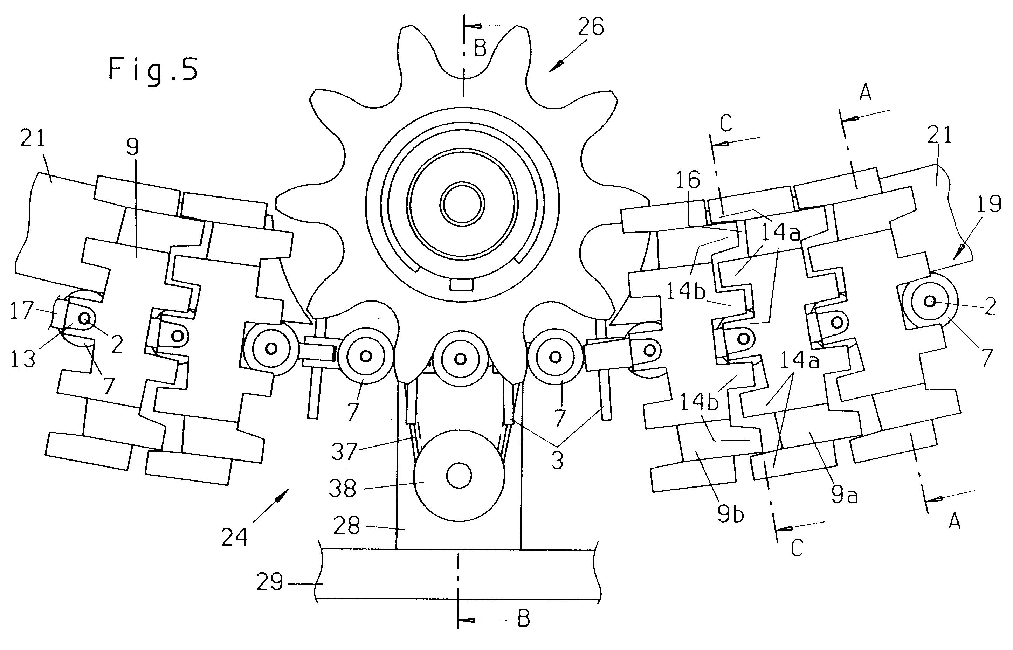

Jede Tragplatte 9 ist an ihrem in Förderrichtung vorderen und hinteren Rand mit Vorsprüngen 14 und Ausnehmungen 16 versehen. Die Vorsprünge 14 und Ausnehmungen 16 des einen Randes sind horizontal quer zur Förderrichtung zu denen des anderen Randes versetzt, so daß, wie die Draufsicht der Figur 5 zeigt, die Vorsprünge einer Tragplatte 9 in die Ausnehmungen 16 der benachbarten Tragplatte eingreifen können. Auf diese Weise wird eine durchgehende Auflagefläche 11 gebildet, auf der das Fördergut sicher transportiert werden kann. Das Ineinandergreifen der Vorsprünge und Ausnehmungen benachbarter Tragplattan 9 verhindert, daß Gegenstände die stabförmige Artikel der tabakverarbeitenden Industrie beim Transport zwischen die Tragplatten rutschen können. Da die Vorsprünge 14 und Ausnehmungen 16 mit Spiel ineinandergreifen, ist die seitliche Auslenkbarkeit der Kette gewährleistet, ohne ihre Funktion zu beeinträchtigen.

Jede Tragplatte 9 weist einen in Förderrichtung verlaufenden Führungsansatz oder eine Führungsstange 17 auf, die in eine entsprechende Ausnehmung 18 der benachbarten Tragplatte eingreift.

Die Auflagefläche 11 der Tragplatten kann mit einer quer zur Förderrichtung der Kette verlaufenden buckelartigen Erhebung 46 versehen sein, wie sie in den Figuren 8 und 9 dargestellt ist. Dadurch ergibt sich bei Bewegungen der Kette durch Kurven immer eine queraxiale Ausrichtung dar geförderten Artikel. Dies ist besonders auch dann von Bedeutung, wenn die Artikel als Massenstrom durch Kurven wechselnder Richtung gefördert werden.

Die Figuren 2 und 3 zeigen die Flexibilität der Kette in vertikaler Richtung. Die mit den in horizontaler Richtung verlaufenden Führungsbolzen 3 versehenen Gelenke 6 der Kette erlauben eine nahezu unbeschränkte Auslenkung der Kette in vertikaler Richtung. Bei Bewegungen der Kette entlang einer gekrümmten Bewegungsbahn, deren Krümmungsmittelpunkt auf der axialen Verlängerung der Tragbolzen oberhalb der Tragplatten liegt, wie das in Figur 2 gezeigt ist, ist der Grad der vertikalen Auslenkung allerdings durch die aufeinanderfolgenden, ineinandergreifenden Tragplatten 9 beschränkt. Durch eine entsprechende Gestaltung der Vorsprünge 14 und Ausnehmungen 16 der Tragplatten 9 kann der Krümmungsradius der in dieser Richtung gekrümmten Bewegungsbahn der Kette beeinflußt werden. Liegt der Krümmungsmittelpunkt der Bewegungsbahn der Kette, wie dies Figur 3 zeigt, in der axialen Verlängerung der Tragbolzen 2 nach der den Tragplatten abgewandten Seite hin, so sind nahezu beliebig kleine Krümmungsradien der Bewegungsbahn der Kette möglich, was für das Umlenken der Kette um Umlenkrollen herum genutzt werden kann.

Die Umlenkung der Kette in vertikaler Richtung ist in Figur 8 zu erkennen. Man sieht hier, wie die horizontal aus den Gelenken 4 hervorstehenden Gelenkbolzen 3 mit einem Kettenrad 47 kämmen, um welches die Kette am Ende der Förderstrecke gelenkt ist. Zum Abnehmen des geförderten Gutes greifen schmale Finger 48 in Vertiefungen 49 ein, die in Förderrichtung verlaufend in der Auflagefläche 11 der Tragplatten 9 vorgesehen sind. Über die Finger 48 werden die Artikel zu nicht gezeigten weiterführenden Förderern abgegeben.

In Figur 5 ist die Kette in einer Draufsicht gezeigt, wobei einige der Tragplatten abgenommen sind, um die Anordnung der darunterliegenden Teile besser zu verdeutlichen. Gleiche Teile sind in dieser Darstellung wieder mit denselben Bezugszeichen versehen wie in den Figuren 1 bis 4.

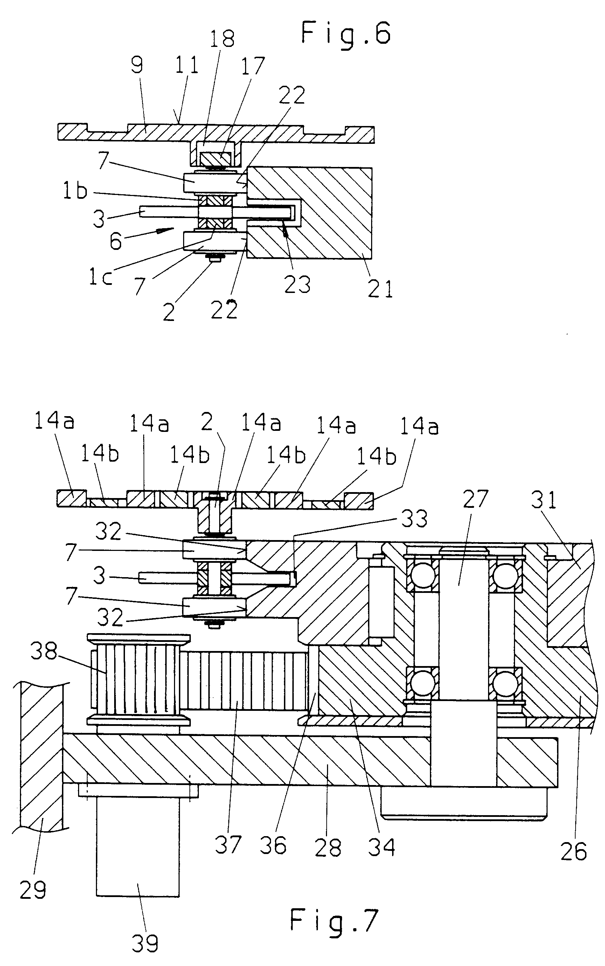

In der Darstellung nach der Figur 5 ist die Förderkette entlang einer seitlich gekrümmten Führungsbahn 19 geführt, die durch eine konvex gekrümmte Führungsschiene 21 vorgegeben ist. Der Schnitt entlang der Linie A-A, der in Figur 6 dargestellt ist, zeigt die auf dem zugehörigen Tragbolzen 2 befestigte Tragplatte 9, in deren unten liegende Ausnehmung 18 (vgl. auch Fig. 1) die Führungsstange 17 der benachbarten Tragplatte eingreift, um die aufeinanderfolgenden Tragplatten in Förderrichtung zu orientieren. Die Laufrollen 7 des Tragbolzens 2 liegen übereinander an zwei parallel verlaufenden Laufflächen 22 der Führungsschiene 21 an und rollen auf diesen bei Bewegungen der Kette in Laufrichtung ab. Durch eine auf die Kette wirkende Zugkraft werden die Laufrollen 7 gegen die Laufflächen 22 derart gepreßt, daß der Tragbolzen 2 vertikal und die Tragplatte 9 mit ihrer Auflagefläche 11 horizontal ausgerichtet werden. Wird die Kette an einer konvex gekrümmten Führungsbahn 19 bewegt, so genügt wegen der auf die Kette wirkende Zugkraft die einseitige Führung der Kette an der Führungsschiene 21.

In Figur 6 ist das Gelenk 6 erkennbar, in welchem zwei aufeinanderfolgende Kettenglieder 1b und 1c (vgl. Fig. 4) mit einem quer zu den Tragbolzen 2 verlaufenden Gelenkbolzen 3 gelenkig verbunden sind. Der Gelenkbolzen 3 ragt beidseitig aus dem Gelenk 6 hervor und greift mit einem seiner Enden in einen Schlitz 23 ein, der parallel zwischen den Laufflächen 22 der Führungsschiene 21 angeordnet ist. Durch diesen in den Schlitz 23 eingreifenden Gelenkbolzen 3 wird die Förderkette vertikal ausgerichtet. Sie behält daher auf ihrem ganzen Förderweg die für sie vorgesehene Laufhöhe bei.

Figur 9 zeigt eine bevorzugte Ausführungsform der Vorrichtung, bei der der Schlitz 23 nur vorgesehen ist, um Raum für die horizontalen Gelenkbolzen 3 zu bieten, die hier frei in den Schlitz eingreifen, möglichst ohne seine Wendungen zu berühren. Hier dienen diese Gelenkbolzen nicht der Führung der Kette entlang der Führungsschiene 21. Stattdessen weisen die Laufrollen 41 neben ihrer Lauffläche 42 jeweils einen Rad- oder Spurkranz 43 auf. Die Laufflächen der Laufrollen laufen an den vertikalen Stirnflächen von Schienen 44 ab, die parallel zueinander beidseits des Schlitzes 23 der Führungsschiene 21 die Führungsbahn der Kette vorgeben. Die Spurkränze 43 umgreifen die Schienen 44 und gewährleisten die exakte Einhaltung der Bewegungsbahn der Kette, so daß weder die Gelenkbolzen 3 noch etwa zusätzliche Rollen für die Führung der Kette und ihre vertikale Ausrichtung erforderlich sind. Bei dieser Gestaltung der Kette genügt allein die auf die Kette wirkende Zugkraft, um sie exakt entlang einer konvex gebogenen Führungsbahn zu bewegen.

Die Führungsschiene 21 kann einen wendelförmigen Verlauf haben, so daß die Förderkette einer wendelförmigen Förderstrecke folgt. Eine solche Anordnung ist beispielsweise in der DE 42 24 609 A1 der Anmelderin beschrieben. Dort verläuft die Förderkette in einer ersten von einer solchen Führungsschiene 21 gebildeten Führungsbahnwendel aufwärts und gelangt über eine verstellbare, S-förmig ausgebildete Bandbrücke in eine zweite Führungsbahnwendel, in welcher das Fördertrum der Förderkette abwärts zu einer Abgabezone bewegt wird. Das Rücklauftrum wird zur Aufgabezone zurückgeführt. Diese in der älteren Patentanmeldung beschriebene Fördervorrichtung dient als Massenspeicher für stabförmige Artikel der tabakverarbeitenden Industrie, die auf dem Kettenförderer als Massenstrom durch die Führungsbahnwendeln und über die Bandbrücke hinweg von einer Aufgabezone zur Abgabezone bewegt werden. Zwischen der Abgabezone des Fördertrums und der Aufgabezone kann die Förderkette über Umlenkrollen 47 (Fig. 8) zurückgeführt werden, die die Kette an den horizontalen Gelenkbolzen 3 angreifen. Dazu können die Umlenkrollen eine Verzahnung aufweisen, die mit den Abständen der Gelenkbolzen korrespondiert.

Ein Richtungswechsel der seitlichen Auslenkung der Kette ist möglich, indem die Kette tangential von der ersten Führungsbahn 19 wegbewegt und an eine zweite, gegenüberliegende Führungsbahn (nicht dargestellt) angelegt wird. Dabei tauchen die horizontalen Gelenkbolzen 3 nacheinander aus dem Schlitz 23 der ersten Führungsbahn 19 aus und greifen nacheinander mit ihrem entgegengesetzten Ende in den der weiterführenden Führungsbahn ein. Die Förderkette kann über die Umlenkrollen 47 in Längsrichtung angetrieben werden. Zusätzlich können im Zuge der Förderstrecke weitere Antriebsmittel 24 vorgesehen sein, die eine möglichst gleichmäßige Bewegung der Kette auf ihrer ganzen Länge bewirken. Ein solches Antriebsmittel 24 ist in den Figuren 5 und 7 in einer Draufsicht und einem Querschnitt dargestellt. Der Querschnitt der Figur 7 verläuft unterhalb der Tragplatte entlang der Linie B-B und in der Ebene der Tragplatte entlang der Linie C-C der Figur 5. Die Figuren 5 und 7 zeigen ein Kettenrad 26, dessen Zähne mit den Laufrollen 7 der Förderkette kämmen. Das Kettenrad 26 ist auf einer Welle 27 gelagert, die in einem Tragarm 28 vertikal befestigt ist. Der Tragarm 28 ist an einer Säule 29 eines im übrigen nicht weiter dargestellten Maschinengestells angebracht. Der Aufbau einer solchen Vorrichtung ist in der obenerwähnten DE 42 24 609 A1 beschrieben.

Der mit der Förderkette kämmende Zahnkranz 31 des Kettenrades 26 weist zwischen zwei übereinander angeordneten Anlageflächen 32 für die Laufräder 7 des Tragbolzens 2 einen Führungsschlitz 33 auf, in welchen die Führungsbolzen 3 der Kette beim Passieren des Kettenrades eingreifen, um auch in diesem Bereich die vertikale Ausrichtung der Kette zu gewährleisten. Sind die Laufrollen der Kettenglieder mit Spurkränzen versehen, so ist der Zahnkranz 31 des Kettenrades 26 entsprechend bemessen, so daß die Spurkränze 43 beim Eingreifen in den Zahnkranz diesen axial umgreifen und so auch hier die vertikale Ausrichtung der Kette gewährleisten.

Das Kettenrad 26 weist axial zum Zahnkranz 31 versetzt einen Abschnitt 34 mit einer Verzahnung 36 für einen Zahnriementrieb 37 auf. Über den Zahnriemen 37 und eine Riemenscheibe 38 wird das Kettenrad 26 von einem Motor 39 angetrieben. Je nach gewünschter Förderrichtung der Förderkette kann das Kettenrad 26 in die eine oder die andere Richtung gedreht werden, um die Kette entsprechend anzutreiben.

Der Schnitt C-C durch die Tragplatte, der in Figur 7 oberhalb des Kettenrades 26 dargestellt ist, zeigt die Vorsprünge 14a und 14b der hier aufeinderfolgenden Tragplatten 9a und b, die entlang diesem Schnitt wechselweise ineinandergreifen.

## Patentansprüche

1. Förderkette zum queraxialen Fördern von stabförmigen Artikeln der tabakverarbeitenden Industrie, insbesondere als mehr lagigen Massenstrom, entlang einer Förderstrecke, deren Glieder gelenkig miteinander verbunden und mit aufrecht angeordneten Tragbolzen versehen sind, welche an ihrem oberen Ende eine Tragplatte mit einer in einer Radialebene des Tragbolzens verlaufenden Auflagefläche für das Fördergut tragen, dadurch gekennzeichnet, daß die Gelenkbolzen (2,3) aufeinanderfolgender Gelenke (4,6) senkrecht zueinander verlaufen, daß jeder zweite Gelenkbolzen (2) als wenigstens nach einer Seite aus dem Gelenk (4) herausragender Tragbolzen mit einer in einer zu seiner Achse radialen Ebene schwenkbaren Tragplatte (9) ausgebildet ist, daß der Tragbolzen (2) wenigstens einen aus dem Gelenk (4) herausragenden axialen Abschnitt aufweist, an welchem zwei Laufrollen (7) mit im wesentlichen zylindrischen, konzentrisch zur Tragbolzenachse verlaufenden Mantelflächen drehbar gelagert sind, daß die Mantelflächen der Laufrollen (7) eines jeden Tragbolzens (2) zur horizontalen Ausrichtung der Auflagefläche (11) der Tragplatten (9) durch eine auf die Kette wirkende Zugkraft mit zwei quer zur Laufrichtung vertikal übereinander parallel verlaufenden Laufflächen (22) einer wenigstens streckenweise konvex gebogenen Führungsbahn (19) in die Last des Förderguts tragende Anlage bringbar sind und daß horizontale Gelenkbolzen (3), die auf beiden Seiten aus den zwischen den Gelenken (4) mit den Tragbolzen (2) liegenden Gelenken (6) herausragen, in Förderrichtung verschiebbar in einen zwischen den parallelen Laufflächen (22) der Führungsbahn (19) verlaufenden Schlitz (23) hineinzuragen vorgesehen sind.

2. Förderkette nach Anspruch 1, dadurch gekennzeichnet, daß jede Tragplatte (9) an den in Förderrichtung vorderen und hinteren Rändern Vorsprünge (14) und Ausnehmungen (16) hat, daß die Vorsprünge und Ausnehmungen des vorderen Randes zu denen des hinteren Randes seitlich versetzt sind und daß die Vorsprünge und Ausnehmungen aufeinanderfolgender Tragplatten zum Bilden einer Auflagefläche für das Fördergut mit Spiel ineinandergreifen.

3. Förderkette nach Anspruch 1 oder 2, dadurch gekennzeichnet, daß jede Tragplatte (9) an ihrer Unterseite eine sich in Förderrichtung über das Auflageflächenprofil hinaus erstreckende Führungsstange (17) aufweist, welche zur Ausrichtung der Tragplatte in Förderrichtung in eine entsprechende Aussparung (18) an der Unterseite der benachbarten Tragplatte eingreift.

4. Förderkette nach einem der Ansprüche 1 bis 3, dadurch gekennzeichnet, daß als Laufflächen die mit Abstand vertikal übereinander verlaufenden Frontflächen von die Führungsbahn (19) bildenden parallelen Schienen (44) vorgesehen sind, daß am Tragbolzen (2) zwei Laufrollen (41) drehbar gelagert sind, und daß jede Laufrolle eine im wesentlichen zylindrische Lauffläche (42) zum Abrollen auf einer Schiene (44) und einen Spurkranz (43) zum Führen der Laufrolle entlang der Schiene aufweist.

5. Förderkette nach einem der Ansprüche 1 bis 4, dadurch gekennzeichnet, daß die Auflageflächen (11) der Tragplatten (9) im Fördertrum der Kette eine im wesentlichen horizontale oder in Förderrichtung ansteigende bzw. abfallende Fläche bilden und daß beide Laufrollen (7) eines Tragbolzens (2) einseitig an zwei in einer vertikalen Ebene übereinander verlaufenden Laufflächen (22) der Führungsbahn (19) anliegen und geführt sind.

6. Förderkette nach einem der Ansprüche 1 bis 5, dadurch gekennzeichnet, daß die Tragplatten (9) auf ihrer Auflagefläche (11) quer zur Förderrichtung verlaufende buckelartige Erhebungen (46) zum queraxialen Ausrichten der geförderten Artikel in wechselnden Kurven aufweisen.

7. Förderkette nach einem der Ansprüche 1 bis 6, dadurch gekennzeichnet, daß die Laufrollen (7) aus einem verschleißfesten Sintermaterial bestehen.

8. Förderkette nach einem der Ansprüche 1 bis 7, dadurch gekennzeichnet, daß die Laufrollen (7) aufeinanderfolgender Tragbolzen (2) zum Eingreifen in die Verzahnung (36) eines Kettenrades (26) ausgebildet und angeordnet sind.

9. Fördervorrichtung mit einer Kette nach einem der Ansprüche 1 bis 8, dadurch gekennzeichnet, daß eine die Förderstrecke vorgebende, wenigstens abschnittsweise konvex gebogen verlaufende Führungsbahn (19) mit zwei vertikal übereinander angeordneten und parallel zueinander verlaufenden Laufflächen (22,44) und einem zwischen den Laufflächen parallel zu ihnen verlaufenden Schlitz (23) vorgesehen ist, daß die Förderkette als endloser, umlaufend antreibbarer Förderer ausgebildet ist, daß die Laufrollen (7) zur horizontalen Ausrichtung der Auflageflächen (11) der Tragplatten (9) durch eine auf die Kette wirkende Zugkraft an die Laufflächen (22,44) der Führungsschiene (21,44) angepreßt werden und bei Bewegungen der Kette in Förderrichtung an ihnen abrollen, daß die Gelenkbolzen (3) in Förderrichtung verschiebbar in den Schlitz (23) eingreifen und daß reversierbare Antriebsmittel (26,38) zum Bewegen der Kette in entgegengesetzte Richtungen entlang der Führungsschiene (21) vorgesehen sind.

10. Fördervorrichtung nach Anspruch 9, dadurch gekennzeichnet, daß wenigstens eine Lauffläche (22) der Führungsschiene (21) in einem Streckenabschnitt unterbrochen ist, daß in diesem Streckenabschnitt als Antriebsmittel (24) ein von einem reversierbaren Antrieb (38) antreibbares Kettenrad (26) angeordnet ist, welches um eine zu den Tragbolzen (2) der Kette parallele Achse drehbar ist und dessen Zähne (36) durch die Ebene der unterbrochenen Laufflächen hindurch in die Zwischenräume zwischen benachbarten Laufrollen (7) der Kette eingreifen und die Kette in eine gewünschte Richtung bewegen.

## Claims

1. Conveying chain for conveying rod-shaped articles of the tobacco-processing industry transversely to their axis, in particular as a multi-layered mass flow, over a conveying section, the links of which are articulatedly interconnected and equipped with carrying pins which are arranged upright and at their upper end carry a carrying plate having a supporting surface, extending in a radial plane of the carrying pin, for the articles to be conveyed, characterised in that the joint pins (2,3) of successive joints (4, 6) extend perpendicularly to one another, in that every second joint pin (2) is designed as a carrying pin which projects out of the joint (4) at least on one side and has a carrying plate (9) pivotable in a plane radial to the axis of said carrying pin, in that the carrying pin (2) has at least one axial portion which projects out of the joint (4) and on which two running rollers (7) having substantially cylindrical circumferential surfaces extending concentrically to the carrying-pin axis are rotatably mounted, in that the circumferential surfaces of the running rollers (7) of each individual carrying pin (2), for the horizontal alignment of the supporting surface (11) of the carrying plates (9), can be brought by a tensile force acting on the chain to bear, for carrying the load of the articles to be conveyed, on two running surfaces (22), extending transversely to the running direction vertically above one another and in parallel, of a guideway (19) which is convexly curved at least in stretches, and in that horizontal joint pins (3), which project on both sides out of the joints (6) lying between the joints (4) having the carrying pins (2), are provided to project, in such a manner as to be displaceable in the conveying direction, into a slot (23) extending between the parallel running surfaces (22) of the guideway (19).

2. Conveying chain according to Claim 1, characterised in that each carrying plate (9) has projections (14) and recesses (16) at the edges which are at the front and rear in the conveying direction, in that the projections and recesses of the front edge are laterally offset with respect to those of the rear edge, and in that the projections and recesses of successive carrying plates interdigitate with play to form a supporting surface for the articles to be conveyed.

3. Conveying chain according to Claim 1 or 2, characterised in that each carrying plate (9) has on its underside a guide bar (17) which extends in the conveying direction beyond the profile of the supporting surface and, for the alignment of the carrying plate in the conveying direction, engages in a corresponding cutout (18) on the underside of the neighbouring carrying plate.

4. Conveying chain according to one of Claims 1 to 3, characterised in that the front faces, extending at a distance from and vertically above one another, of parallel rails (44) forming the guideway (19) are provided as the running surfaces, in that two running rollers (41) are rotatably mounted on the carrying pin (2), and in that each running roller has a substantially cylindrical running surface (42) for rolling on a rail (44) and a flange (43) for guiding the running roller along the rail.

5. Conveying chain according to one of Claims 1 to 4, characterised in that the supporting surfaces (11) of the carrying plates (9) form, in the conveying run of the chain, a surface which is substantially horizontal or rises or falls in the conveying direction, and in that both running rollers (7) of a carrying pin (2) bear and are guided, on one side, on two running surfaces (22), extending in a vertical plane above one another, of the guideway (19).

6. Conveying chain according to one of Claims 1 to 5, characterised in that the carrying plates (9) have on their supporting surface (11) hump-like elevations (46), extending transversely to the conveying direction, for aligning the conveyed articles transversely to their axis in changing curves.

7. Conveying chain according to one of Claims 1 to 6, characterised in that the running rollers (7) consist of a wear-resistant sintered material.

8. Conveying chain according to one of Claims 1 to 7, characterised in that the running rollers (7) of successive carrying pins (2) are designed and arranged to engage in the toothing (36) of a sprocket wheel (26).

9. Conveying apparatus having a chain according to one of Claims 1 to 8, characterised in that a guideway (19), which defines the conveying section, extends, at least in portions, in a convexly curved manner, has two running surfaces (22,44) arranged vertically above one another and extending parallel to one another and a slot (23) extending between the running surfaces and parallel to them, is provided, in that the conveying chain is designed as an endless conveyor drivable in circulating fashion, in that the running rollers (7), for the horizontal alignment of the supporting surfaces (11) of the carrying plates (9), are pressed by a tensile force acting on the chain onto the running surfaces (22,44) of the guide rails (21,44) and upon movement of the chain roll on them in the conveying direction, in that the joint pins (3) engage, in such a manner as to be displaceable in the conveying direction, in the slot (23), and in that reversible drive means (26,38) for moving the chain in opposite directions along the guide rail (21) are provided.

10. Conveying apparatus according to Claim 9, characterised in that at least one running surface (22) of the guide rail (21) is interrupted in one section, in that a sprocket wheel (26), which can be driven by a reversible drive (38), is rotatable about an axis parallel to the carrying pins (2) of the chain and whose teeth (36) engage, through the plane of the interrupted running surfaces, in the intermediate spaces between neighbouring running rollers (7) of the chain and move the chain in a desired direction, is arranged in this section as the drive means (24).

## Revendications

1. Chaîne transporteuse pour l'entraînement, transversalement à leur axe, d'articles en forme de tiges de l'industrie de transformation du tabac, notamment sous la forme d'un flux massique en plusieurs couches, le long d'un trajet section de transport, chaîne dont les maillons sont reliés entre eux de façon articulée et sont pourvus de goujons de support verticaux qui portent, à leur extrémité supérieure, une plaque de support comportant une surface d'appui pour le produit transporté, qui s'étend dans un plan radial du goujon de support, caractérisée en ce que les axes d'articulation (2,3) d'articulations successives (4,6) sont perpendiculaires entre eux, en ce que chaque second axe d'articulation (2) est réalisé, sous la forme d'un goujon de support, qui fait saillie au moins d'un côté hors de l'articulation (4) et comporte une plaque de support (9) pouvant pivoter dans un plan radial par rapport à son axe, en ce que le goujon de support (2) comporte au moins une partie axiale, qui fait saillie hors de l'articulation (4) et sur laquelle sont montés à rotation deux galets de roulement (7) ayant des surfaces enveloppes sensiblement cylindriques, qui sont concentriques à l'axe du goujon de support, en ce que pour l'alignement horizontal des surfaces d'appui (11) des plaques de support (9), les surfaces enveloppes des galets de roulement (7) de chaque goujon de support (2) peuvent être amenées en appui, au moyen d'une force de traction agissant sur la chaîne, contre deux surfaces de roulement (22), qui s'étendent parallèlement en étant disposées verticalement l'une au-dessus de l'autre transversalement à la direction de déplacement, d'une voie de guidage (19) cintrée sous une forme convexe au moins par tronçons, de manière à supporter la charge du produit transporte, et en ce que des axes d'articulation horizontaux (3), qui font saillie des deux côtés hors des articulations (6) situées entre les articulations (4) comportant les goujons de support (2), sont prévus de manière à pénétrer dans une fente (23) qui s'étend entre les surfaces de roulement parallèles (22) de la voie de guidage (19), en étant déplaçables dans la direction de transport.

2. Chaîne transporteuse selon la revendication 1, caractérisée en ce que chaque plaque de support (9) comporte, sur les bords avant et arrière dans la direction de transport, des appendices saillants (14) et des évidements (16), en ce que les appendices saillants et les évidements du bord avant sont décalés latéralement par rapport à ceux du bord arrière et en ce que les appendices saillants et les évidements de plaques de support successives s'engagent les uns dans les autres, avec jeu, pour former une surface d'appui pour le produit transporté.

3. Chaîne transporteuse selon la revendication 1 ou 2, caractérisée en ce que chaque plaque de support (9) comporte, sur sa face inférieure, une barre de guidage (17) qui s'étend dans la direction de transport au-delà du profil de la surface d'appui et qui, pour l'alignement de la plaque de support dans la direction de transport, s'engage dans un évidement correspondant (18) formé dans la face inférieure de la plaque de support voisine.

4. Chaîne transporteuse selon l'une des revendications 1 à 3, caractérisée en ce que les surfaces frontales, s'étendant à distance l'une au-dessus de l'autre en direction verticale, de rails parallèles (44) formant la voie de guidage (19) sont prévues en tant que surfaces de roulement, en ce que deux galets de roulement (41) sont montés à rotation sur le goujon de support (2) et en ce que chaque galet de roulement possède une surface de roulement sensiblement cylindrique (42), destinée à rouler sur un rail (44), et un boudin (43) guidant le galet de roulement le long du rail.

5. Chaîne transporteuse selon l'une des revendications 1 à 4, caractérisée en ce que les surfaces d'appui (11) des plaques de support (9) forment, dans le brin de transport de la chaîne, une surface sensiblement horizontale ou qui monte ou descend dans la direction de transport, et en ce que les deux galets de roulement (7) d'un goujon de support (2) s'appliquent et sont guidés, d'un côté, sur deux surfaces de roulement (22) de la voie de guidage (19), qui sont disposées l'une au-dessus de l'autre dans un plan vertical.

6. Chaîne transporteuse selon l'une des revendications 1 à 5, caractérisée en ce que les plaques de support (9) possèdent, sur leur surface d'appui (11), des parties surélevées (46) en forme de bossages, qui s'étendent transversalement à la direction de transport, pour l' alignement, transversalement à leur axe, des articles convoyés, dans des courbes changeantes.

7. Chaîne transporteuse selon l'une des revendications 1 à 6, caractérisée en ce que les galets de roulement (7) sont constitués par un matériau fritté résistant à l'usure.

8. Chaîne transporteuse selon l'une des revendications 1 à 7, caractérisée en ce que les galets de roulement (7) de goujons de support successifs (2) sont conçus et disposés de manière à s'engager dans la denture (36) d'une roue à chaîne (26).

9. Dispositif de transport comportant une chaîne selon l'une des revendications 1 à 8, caractérisé en ce qu'une voie de guidage (19), qui prédétermine le trajet de transport et est incurvée sous une forme convexe au moins par tronçons, comporte deux surfaces de roulement (22,44), qui sont disposées verticalement l'une au-dessus de l'autre et s'étendent parallèlement l'une à l'autre, et une fente (23) qui s'étend entre les surfaces de roulement, parallèlement à ces dernières, en ce que la chaîne transporteuse est réalisée sous la forme d'un transporteur sans fin, pouvant être entraîné en circulation, en ce que les galets de roulement (7) sont repoussés, pour l'alignement horizontal des surfaces d'appui (11) des plaques de support (9), sous l'effet d'une force de traction agissant sur la chaîne, contre les surfaces de roulement (22,44) des rails de guidage (21,44) et, lors de déplacements de la chaîne dans la direction de transport, roulent sur ces surfaces, en ce que les axes d'articulation (3) s'engagent dans la fente (23) en étant déplaçables dans la direction de transport, et en ce que des moyens d'entraînement réversibles (26,38) sont prévus pour déplacer la chaîne dans des directions opposées le long du rail de guidage (21).

10. Dispositif de transport selon la revendication 9, caractérisé en ce qu'au moins une surface de roulement (22) du rail de guidage (21) est interrompue dans une partie du trajet, en ce que dans cette partie du trajet, est disposée comme moyens d'entraînement (24), une roue à chaîne (26), qui peut être entraînée par un dispositif d'entraînement réversible et qui peut tourner autour d'un axe parallèle aux goujons de support (2) de la chaîne> roue à chaîne dont les dents (36) s'engagent, en traversant le plan des surfaces de roulement interrompues, dans les espaces intermédiaires présents entre des galets de roulement voisins (7) de la chaîne et déplacent la chaîne dans une direction souhaitée.
